# EUROPEAN PATENT SPECIFICATION

(11) **EP 2 805 811 B1**
(45) Date of publication and mention of the grant of the patent: **10.04.2024**
(21) Application number: 14169177.4
(22) Date of filing: 20.05.2014
(51) Int. Cl.: B32B 3/28, B32B 7/12

(54) **Folded core panel**
Platte mit gefaltetem Kern
Panneau à âme pliée

(30) Priority: 21.05.2013 US 201313899116
(43) Date of publication of application: 26.11.2014
(73) Proprietor: The Boeing Company, Arlington, VA 22202 (US)
(72) Inventor: Tien, Allan, Chicago, IL Illinois 60606-2016 (US)
(74) Representative: Morrall, Jonathan Ian McLachlan

(56) References cited:
- WO-A1-2005/058593
- JP-A- 2000 064 499
- US-A- 5 443 779
- US-A1- 2011 020 595
- DATABASE WPI Week 200930 Thomson Scientific, London, GB; AN 2009-H34648 XP002728915, -& RU 2 352 726 C1 (UNIV KAZAN TECHN) 20 April 2009 (2009-04-20)

## Description

### BACKGROUND

Various components in an aircraft may be made using honeycomb panels. Honeycomb panels typically consist of a honeycomb core sandwiched between two face sheets. Honeycomb panels can be relatively lightweight, yet rigid, when compared to other types of panels, lending themselves to multiple uses in an aircraft. Examples of uses include the exterior skin panels of the aircraft, flooring, and the sidewalls of an aircraft. US5443779 relates to a method of production of a composite corrugated body wherein vertically extending ridges and grooves are formed alternately in a sheet material to form corrugate lines that meander in a plane to form a corrugated body and wherein a flat liner is adhered to at least one of the opposite faces of the corrugated body, and to a method of formation of corrugating rollers for use in production of such composite corrugated body. WO2005058593 relates to a sandwich panel with light core from corrugated sheet material in the form of zigzag crimp.

Although providing advantages over other types of panels, honeycomb cores can suffer from various material issues. For example, honeycomb cores can be prone to moisture ingression issues. Moisture can seep into cracks and crevices of the honeycomb panels, but may not be removed because a honeycomb pattern may not facilitate much, if any, airflow. The remaining moisture may collect underneath the face sheets, which over time, may cause the face sheets to peel off.

Honeycomb cores may also require a relatively large amount of adhesive to be applied to properly join the honeycomb core to the face sheets. During operation of the aircraft, a relatively large amount of shear force may be applied to a face sheet. The shear force may be transferred to the interface between the face sheet and the honeycomb core. Delamination at the face sheet and the honeycomb core may occur unless a proper amount of adhesive is applied to the honeycomb core.

It is with respect to these and other considerations that the disclosure made herein is presented.

### SUMMARY

It should be appreciated that this Summary is provided to introduce a selection of concepts in a simplified form that are further described below in the Detailed Description.

According to one aspect, a panel for use in an aircraft is provided. The panel may include a top face sheet, a bottom face sheet, and a folded core bonded to the top face sheet and the bottom face sheet. The folded core may be characterized by a corrugated zigzag pattern having a plurality of non-vertical faces ending in a plurality of peaks and a plurality of valleys. The plurality of peaks comprises a generally planar peak having a sharp bend at a zenith, thus providing a partial angular peak.

According to an example of the disclosure herein, a folded core for use in an aircraft is provided. The folded core may include one or more peaks having a one or more ridges and one or more valleys. The one or more peaks and the one or more valleys may be formed in a corrugated zigzag pattern.

According to another aspect, a method of making an aircraft panel is provided. The method may include providing a top face sheet, providing a bottom face sheet and providing a folded core characterized by a corrugated zigzag pattern. The folded core may include a plurality of peaks and a plurality of valleys. The plurality of peaks comprises a generally planar peak having a sharp bend at a zenith, thus providing a partial angular peak. The method may further include applying an adhesive to a top surface of the folded core, applying the adhesive to a bottom surface of the folded core, and curing the adhesive to form an integral panel.

According to a further example, a stacked core is provided. The stacked core may include one or more folded cores. The folded cores may include peaks with one or more ridges, valleys, and non-vertical faces extending between the peaks and the valleys. The peaks and the valleys may be formed in a corrugated zigzag pattern. The folded cores may include complementary features to allow a first folded core to be stacked on a second folded core.

### BRIEF DESCRIPTION OF THE DRAWINGS

FIG. 1 is a perspective view of a portion of a conventional honeycomb panel.
FIG. 2 is a perspective view of a folded core panel, according to various embodiments.
FIG. 3 is a side, cross-sectional view illustrating surface profiles of peaks in a folded core panel, according to various embodiments.
FIG. 4 is a top-down view illustrating multiple peak angles in a folded core panel, according to various embodiments.
FIG. 5 is a perspective view of an alternate folded core panel, according to various embodiments.
FIG. 6 is a perspective view of a still further alternate folded core panel, according to various embodiments.
FIGS. 7A-7C are side, cross-sectional views illustrating surface profiles of peaks in a folded core panel configured to receive complementary peaks of another folded core panel, according to various embodiments.
FIGS. 8A-8C are side, cross-sectional views illustrating surface profiles of cores having complementary features that facilitate the stacking of folded cores , according to various embodiments.
FIG. 9 is an exemplary routine for forming a panel for use in an aircraft, according to various embodiments.

### DETAILED DESCRIPTION

The following detailed description is directed to a folded core for use in an aircraft panel. A folded core panel according to various concepts described herein can provide various peaks upon which a bond may be formed to bond the folded core to face sheets to form the panel. In some configurations, the peaks can provide a bonding surface area greater than the bonding surface area of comparable, conventional core designs. The bonding surface area may help to reduce the amount of bonding agent necessary to sufficiently bond the core to the face sheets.

In some configurations, the peaks of the folded core panel are designed to present a flat, or nearly flat, surface area to an adhesive. The flat profile can provide an increased surface area onto which an adhesive may bond the folded core to the face sheet. A greater bonding surface area may distribute shear forces, as well as other forces, to a greater area of the core bonded to a face sheet. This may reduce the amount of shear force applied to any one specific location of the core. Because of this, in some configurations, a reduction in the amount of adhesive necessary may be realized over similar, conventional core designs.

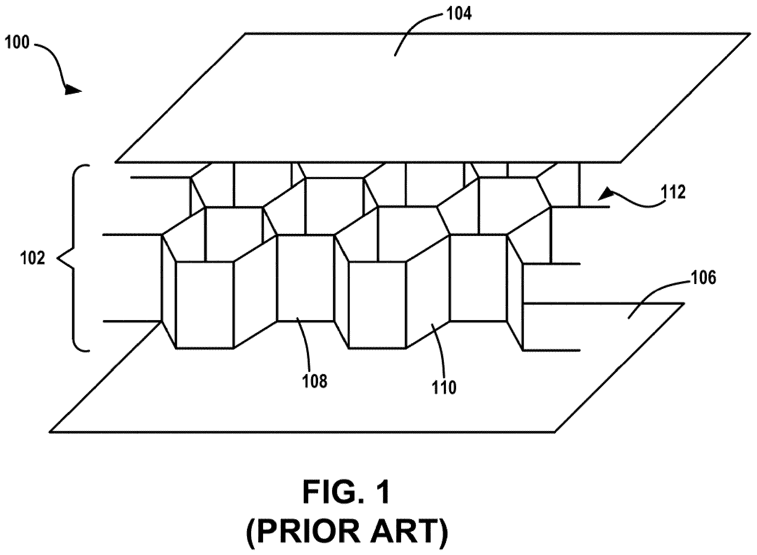

A folded core according to further concepts provided herein may also provide for valleys that provide space sufficient to allow air to flow through the core. In some configurations, this may minimize or eliminate moisture ingress. Conventional honeycomb panels have cores with honeycomb-shaped structures that are tightly packed in a vertical configuration, as illustrated in FIG. 1. A honeycomb panel 100 of conventional design consists of a honeycomb core 102 sandwiched between a top face sheet 104 and a bottom face sheet 106. The honeycomb core 102 is typically bonded to the top face sheet 104 and the bottom face sheet 106 through the use of an adhesive (not shown).

As illustrated, the honeycomb core 102 consists of several honeycomb structures, such as the honeycomb structures 108 and 110. The honeycomb structures 108 and 110 are tightly packed together, that is, the shape and design of the honeycomb structures 108 and 110 allow for the edges of the structures to be flush with adjacent honeycomb structures. While providing for the desired structural rigidity and strength, the tight packing of the honeycomb structures reduces or eliminations any airflow paths through the honeycomb core 102. In some implementations, the ability to remove moisture that may collect in the honeycomb core 102 is prevented by the tight packing of the honeycomb structures 108 and 110. Thus, if moisture gets into the honeycomb core 102, the moisture may collect and affect the bond between the honeycomb core 102 and the face sheets 104 and 106, possibly causing the delamination of a portion of the face sheets 104 and 106. The delamination of the face sheets 104 or 106 can cause structural failure and present safety issues.

Further, as mentioned briefly above, conventional honeycomb cores may not provide adequate bonding area. One method of increasing the bond may be through the use of an excess amount of adhesive. While providing a bond sufficient to handle the various stresses applied to the honeycomb panel 100, the additional adhesive can increase the weight of the honeycomb panel 100 beyond an intended or desired amount.

As illustrated in FIG. 1, in a conventional honeycomb core 102, the bonding surface area, such as the surface area 112, can be relatively small. This is often a function of the desired design for the honeycomb core 102. The honeycomb core 102 is preferably hollow with generally even wall thickness along the length of the honeycomb structures that form the honeycomb core 102. In order to increase the surface area of the surface area 112, the honeycomb structures 108 and 110 may need to be manufactured with increased wall thickness. In the alternative, the honeycomb structures 108 and 110 may be manufactured with variable wall thickness, with the greater thickness at the surface area 112 and the thinner wall thickness near a central point of the honeycomb structures 108 and 110.

Either method can significantly increase the complexity of the manufacturing process, thus increasing cost. Increasing the surface area 112 may require specialized manufacturing equipment, resulting in increases in cost and time to make the honeycomb core 102. Further, the additional materials associated with the increased surface area can translate to a heavier honeycomb core 102, possibly negating the benefits of using the honeycomb panel 100.

A folded core according to various concepts described herein uses a folded design to increase the surface area for bonding, while, in some configurations, provides an airflow passageway to help remove moisture.

In the following detailed description, references are made to the accompanying drawings that form a part hereof, and in which are shown by way of illustration specific embodiments or examples. Referring now to the drawings, in which like numerals represent like elements throughout the several figures, aspects of a folded core panel will be presented.

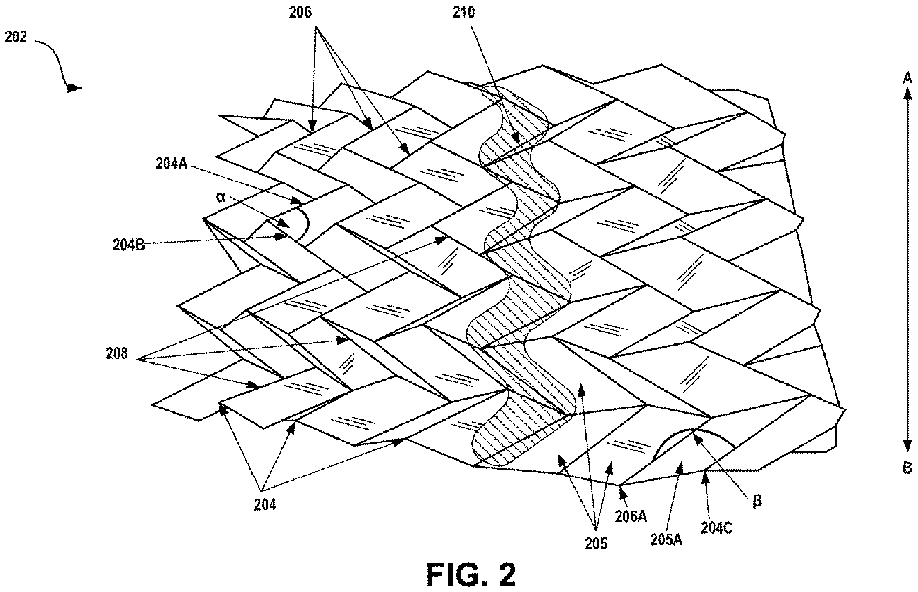

Referring now to FIG. 2, a perspective view of a folded core 202 is presented. The folded core 202 can be constructed of one or more layers of composite material, plastic, metal.

The folded core 202 may be characterized as having a corrugated zigzag pattern. As used herein, "corrugated" includes a surface having parallel peaks and valleys. Also as used herein, "zigzag" includes a pattern having lines characterized by angular turns. It should be understood that the designation of a structure as a "peak" or a "valley" may depend on the orientation of the folded core 202. For example, if the folded core 202 is rotated upside-down, the peaks may resemble valleys. In a similar manner, the valleys may resemble and provide similar functionality to peaks in a different orientation of the folded core 202. Accordingly, the presently disclosed subject matter is not limited to any particular orientation of the peaks and valleys described herein, as the identification and functionality may depend on the orientation of the folded core.

The folded core 202 can be formed by folding or forming a material in a V-shaped pattern having a series of peaks 204 and valleys 206 at distal ends of faces 205 that are non-vertical. The folded core 202 can be formed using a mandrel (not shown) or other forming apparatus. For example, if the folded core 202 is a composite matrix, the folded core 202 may formed by laying down plies of composite matrix-forming material into a mandrel and curing the material into the shape of the folded core 202. In another implementation, the folded core 202 may be a plastic material, such as thermoplastic or thermoset. The plastic material may be extruded or formed into the shape of the folded core 202 using convention plastic-forming techniques. In another embodiment, the folded core 202 may be a metal or metal-alloy. In that embodiment, the material may be folded or cast using conventional metal forming techniques. In a further embodiment, the folded core 202 is a single piece of material. As used herein, "single" includes uncut. The concepts and technologies described herein are not limited to any particular material or any particular method for forming the material.

The peaks 204 are defined by ridges 208 that present a surface area for bonding the folded core 202 to a face sheet using a bonding agent. As used herein, a "bonding agent" includes a chemical, physical, metallic or other mechanism in which a bond may be formed. For example, a bonding agent may be an adhesive, a weld, a rivet.

The present disclosure, however, is not limited to any particular bonding agent. Accordingly, it should be appreciated that the use of an adhesive in relation to various figures herein does not limit the scope of the present disclosure.

Various aspects of the folded core 202 may be modified to provide various characteristics. Some examples of characteristics include, but are not limited to, bonding strength to a face sheet, the ability of the folded core 202 to withstand outside forces, the weight of the folded core 202, and moisture removal capabilities. One example of a modification that may be made to the folded core 202 is the surface profile of the ridges 208.

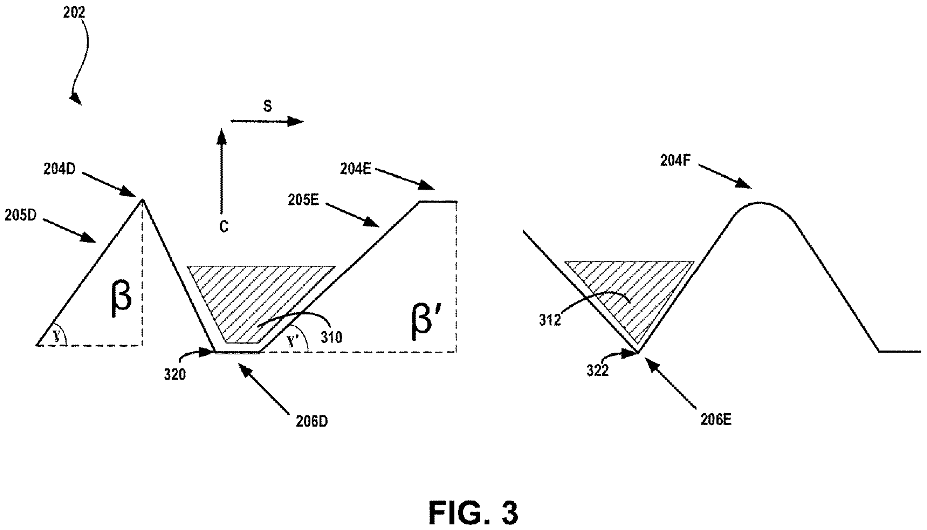

The surface profile of the ridges 208 may be configured to provide various benefits, including, but not limited to, increasing or decreasing the bond between the folded core 202 and a face sheet. Some examples of surface profiles include, but are not limited to, an angular, flat, or rounded profile, or combinations thereof. Each profile type may provide various benefits. For example, an angular surface profile may provide a smaller surface area for adhesion when compared to other types of profiles, but may use less material, resulting in possible weight savings. The flat surface profile may provide a greater surface area for bonding than an angular surface profile and may also present a flatter surface to absorb an impact or outside force, but may use more material than the angular surface profile. The rounded surface profile may provide a middle ground between the benefits of an angular surface profile and the flat surface profile. In FIG. 2, the ridges 208 are illustrated as having an angular profile. Examples of some surface profiles for the ridges 208 are illustrated in further detail in FIG. 3 below.

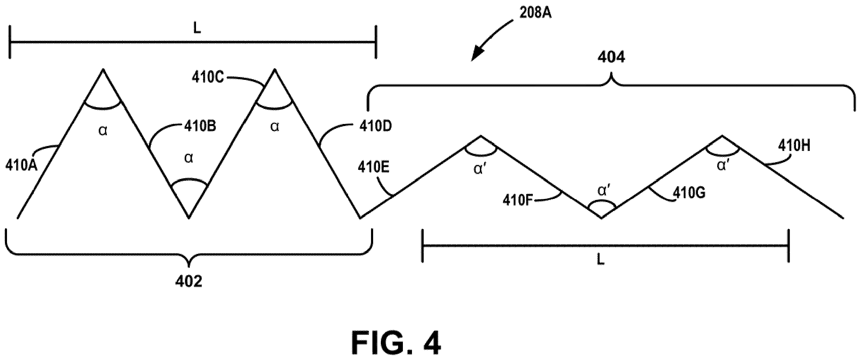

In addition to changing the profile of the ridges 208, other aspects of the folded core 202 may be configured based on the desired characteristics of the folded core 202. For example, the V-shaped pattern of the peaks 204 may be changed. In FIG. 2, a peak 204A and a peak 204B are shown having an angular displacement, illustrated as a peak angle α, that forms the V-shaped pattern. The peak angle α may be set to optimize the folded core 202 for the particular use of the folded core 202. For example, the peak angle α may be relatively small to increase the surface area of the ridges 208 in a particular area, which may increase the surface area available for bonding the folded core 202 to a face sheet. The peak angle α may also be relatively large to decrease the amount of material used to form the folded core 202. These and other aspects are explained in more detail in FIG. 4 below.

Another example of a geometry that may be changed is the slope of the faces 205. A slope may be defined as the gradient of the faces 205. For example, in FIG. 2, the face 205A may have a face slope β measured by the ratio of the altitude change to the horizontal distance between a peak 204C and a valley 206A. The face slope β may be set at a particular gradient to provide various benefits for load transfer, airflow, and the like. When compensating for load transfer, for example, a relatively large face slope may provide a better compressive load transfer path than a relatively smaller face slope. A relatively smaller face slope, however, may provide a better shear load transfer path than a relatively larger face slope. Various aspects of face slopes are described in more detail in FIG. 3 below.

As discussed above, moisture may collect in a core and, over time, damage the bond between a core and the face sheets. If uncorrected, the moisture damage may cause delamination of the face sheet from the core. One of the ways to reduce the effects of moisture is to provide a channel through which moisture may move out of the folded core 202. For example, the folded core 202 may include a channel 210 from point A to point B along the axis AB defined by the peaks 204, the faces 205 and the valleys 206. The channel 210 may provide a way to allow moisture to exit the folded core 202. In some configurations, the channel 210 may be large enough to provide sufficient space to reduce the concentration of the moisture at any one location in the channel 210. Reducing the concentration of moisture at any one point may reduce the likelihood of moisture damaging the bond between the folded core 202 and its facing sheets.

FIG. 3 is a side cross-sectional view of a portion of the folded core 202 showing peaks 204D-204F, faces 205D-205E, and valleys 206D-206E. In the configuration illustrated in FIG. 3, the peak 204D has a generally angular surface profile, the peak 204E has a generally flat surface profile, and the peak 204F has a generally round surface profile. In some configurations, it may be desirable to use the profile of the peak 204D over the profile of the peak 204E. Because of the singular fold at the apex of the peak 204D, it may be less complex to manufacture the peak 204D as compared to the peaks 204E or 204F. The peak 204D may provide a cost and time savings benefit over the peaks 204E or 204F.

But, the singular fold at the apex of the peak 204D may not provide an equivalent surface area for a bonding agent when compared to the peaks 204E and 204F. The flat portion of the peak 204E may present a greater surface area upon which a bonding agent may be affixed than the apex of the peak 204D, thus providing a stronger bond in some configurations. In a similar manner, the rounded shape of the peak 204F may also provide an increased surface area upon which a bonding agent may be applied when compared to the peak 204D.

Even though they may provide a greater surface area for bonding, the peaks 204E and 204F may utilize more material in their construction than the peak 204D, thus increasing the weight of the folded core 202. The choice of peak profile may depend on the design considerations for a particular application. In some implementations, different peaks 204 in the same folded core 202 may have different surface profiles to optimize the peaks 204 for the use at a particular location in the folded core 202.

In FIG. 3, the face 205D has a face slope β, defined by an angle γ, while the face 205E has a face slope β', defined by an angle γ'. In FIG. 3, the face slope β' is smaller than the face slope β. In some examples, the angle γ and the angle γ' may range from 10 degrees to 80 degrees. In some further examples, the angle γ and the angle γ' may range from 30 degrees to 60 degrees. The upper and lower limits of the angle γ and the angle γ' may vary depending on design considerations. Having a larger slope can better handle a compressive force C acting in a generally normal path to the height of the peak 204D. A large slope, such as the face slope β, may better transfer the compressive force C because the compressive force C is transferred in a generally normal direction to the face slope β, reducing the amount of torque applied to radius bend 320. However, the face slope β may not be particularly well-suited to handle a shear force S acting in a generally lateral direction along the length of the peak 204D. The steeper slope of the face slope β causes a greater degree of torque to be generated at the radius bend 320 as compared to a smaller slope.

The peak 204E may be better suited to handle the shear force S than the peak 204D. The smaller slope provided by the slope β' places the structure generally more in-line with the shear force S, thus reducing the generation of torque at the radius bend 322. However, because of the smaller slope, the structure of the peak 204E is not generally in-line with the compressive force C. Thus, the peak 204E may not be able to handle the compressive force C as well as the peak 204D. As with other implementations, the peaks 204 may have different face slopes in the same folded core 202 to provide various benefits at particular locations.

The folded core 202 may have more than one face slope to optimize the folded core 202 for a force-handling requirement at a particular location. For example, in areas in which the folded core 202 is not subject to relatively large amounts of shear stress, the folded core 202 may use a peak having a profile similar to the peak 204D, which may provide weight reduction capabilities. In areas in which the folded core 202 is subject to relatively large amounts of shear stress, the folded core 202 may use a peak having a profile similar to the peak 204E, which may provide increased adhesive capabilities but may suffer from increased weight when compared to the peak 204D. The folded core 202 may use various combinations of the peaks 204D-204F optimize the folded 202 depending on the specific conditions at the location of the peak.

The face slope of the folded core 202 may also be configured to provide for a certain degree of air transfer. For example, a channel 310 may have a certain volume and channel profile provided the peaks 204D-204E and the valley 206D, while a channel 312 may have a certain volume and channel profile provided the peaks 204E-204F and the valley 206E. Different profiles may provide different moisture movement capabilities. In some configurations, the face slopes may be adjusted based on desired airflow capabilities, as well as force handling capabilities if that is an additional factor. These and other capabilities may be provided by configuring other aspects of the folded core 202.

FIG. 4 is a top-down view of a ridge 208A of the folded core 202. The peak 204 is shown having a peak angle α in a section 402 and a peak angle α' in a section 404. The peak angle α is a narrow peak angle and the peak angle α' is a wide peak angle. As used herein, "a narrow peak angle" includes a peak angle equal to or less than 90 degrees. In some examples, a narrow peak angle may range from 20 degrees to 90 degrees. In some implementations, the lower limit of the peak angle α may be limited by the amount of material used in the composite structure as well as weight considerations. The ability to bend layers of material into relatively narrow angles without damage to the materials decreases as the amount of material increases. Further, as used herein, a "wide peak angle" includes a peak angle greater than 90 degrees. In some examples, a wide peak angle may range from greater than 90 degrees to 150 degrees. In some implementations, the upper limit of the peak angle α may be limited by a reduction in the advantages attainted by a folded core. As the peak angle α increases, the ridge 208A increasingly resembles a straight line, reducing the bonding surface area and the amount of material available for force absorption. Decreasing the peak angle can increase the amount of surface area to which the folded core 202 may be bonded to face sheets by increasing the surface area of the ridge 208A per a given length. By way of illustration, the lengths 410A-410H (collectively herein referred to as "the lengths 410") are areas on the ridge 208A to which an adhesive or other bonding agent may be applied to bond the folded core 202 to a face sheet. Increasing the number of lengths can provide an increased bond between the folded core 202 and a face sheet at a particular location.

For example the portion of the ridge 208A provided by the peak angle α may include lengths 410A-410D within a transverse length L of the ridge 208A. By comparison, the portion of the ridge 208A having the peak angle α' may include lengths 410F and 410G but only portions of length 410E and 410H within the same transverse length L of the ridge 208A. As shown, the portion of the ridge 208A provided by the peak angle α provides more area along the transverse length L due to the increased number of the lengths 410, as compared to the portion of the ridge 208A having the peak angle α. The greater number of lengths may help to increase the strength of the bond between the folded core 202 and a face sheet. But, the increased number of lengths may also impact the weight of the material for a given length. All other factors being equal, increasing the amount of material in a given transverse length L can increase the weight of the folded core 202.

To further optimize the folded core 202 for a specific application, the folded core 202 may also be configured with peaks having more than one peak angle. For example, in areas in which a relatively strong bond strength is desired, the folded core 202 may have a peak with the narrow peak angle α. In areas in which the strength of the bond may not be a factor as much as the weight savings, the folded core 202 may have a peak with the portion provided by the wide peak angle α.

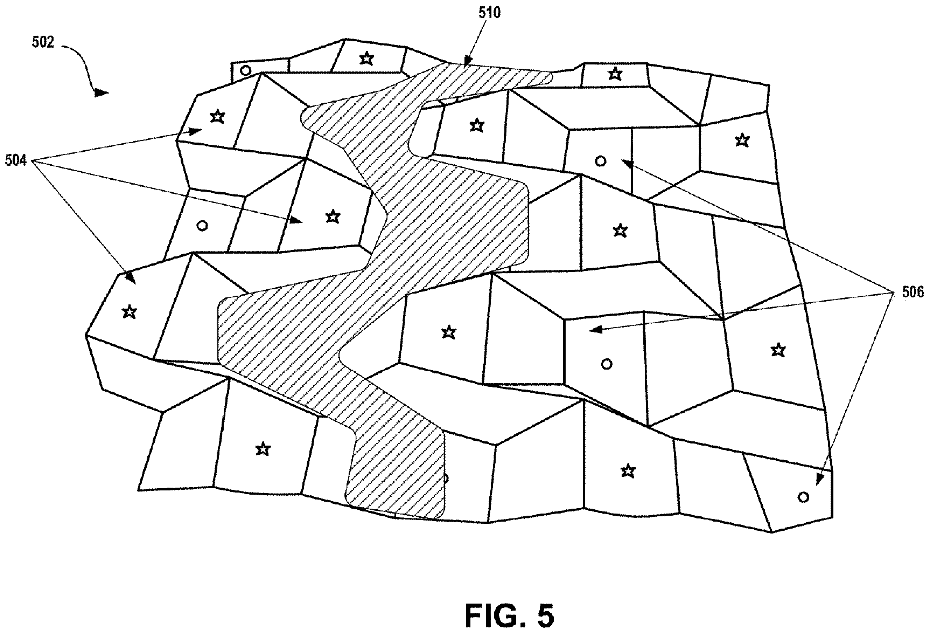

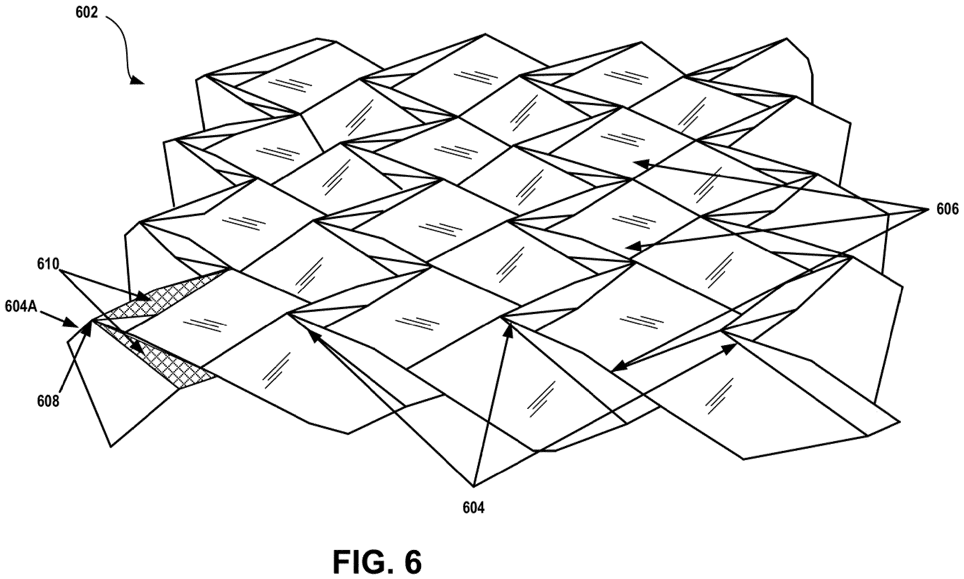

FIGS. 5 and 6 provide examples of further configurations of folded core panels. Referring now to FIG. 5, a perspective view of a folded core 502 is illustrated. The folded core 502 has peaks 504, which are identified with a star, " 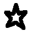 ". The peaks 504 provide a bonding surface to which the folded core 502 may be bonded to a face sheet. The peaks 504 may also act as an initial force transfer interface between a load applied to the peaks 504 and some other structure in an aircraft. As illustrated, the peaks 504 have a generally planar shape when compared to the peaks 204 of FIG. 2. The planar shape may provide various benefits over other shapes.

For example, a planar shape may provide for a better bond strength when compared to an angular shape. The greater surface area of the peaks 504 may present a relatively larger interface to which chemical bonds may be formed with the adhesive, thus possibly increasing the bonding strength for a given amount of adhesive. Increasing the bonds between the peaks 504 and an adhesive can also help to reduce the amount of adhesive necessary to create a bond of a certain strength. If more bonds are available for adhesion, less adhesive may be needed to create a bond having a strength similar to bonds between more angular peaks, such as the peaks 204 of FIG. 2, and a face sheet.

The increased surface area of the peaks 504 in relation to other configurations for peaks may help to distribute a force to a greater area than what may be found in the other peak designs. The distribution of forces may help reduce the impact of a force at any one particular location of the peaks 504. For example, a force of one pound-force applied to a surface having an area of one square inch translates to a pressure of one pound per square inch, whereas, the same one pound-force applied to a surface having an area of one hundred square inches translates to a pressure of one pound per one hundred square inches. The force of the second scenario is distributed to a greater surface area, i.e. one hundred square inches rather than one square inch, thus minimizing the effect of the same force at any one location on the peaks 504. This may provide for the ability of the peaks 504 to have a lighter design, needing only to account for a smaller pound-force per square inch than a comparable peak, such as the peaks 204 of FIG. 2, which are angular in nature and, therefore, may not disperse a force in a similar manner.

The folded core 502 also includes valleys 506, identified in FIG. 5 with a circle, " 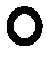 ". The valleys 506 may be configured in a manner similar to the peaks 504 to provide similar structural benefits when used to bond the folded core 502 to a folded sheet. Further, the configuration of the valleys 504 may help to provide an airflow channel 510. The airflow channel 510 may allow moisture that enters the folded core 502 to exit the folded core 502 along the airflow channel 510.

Moisture may enter the folded core 502 in various ways. For example, defects in the face sheets may allow ingress points through which water or other liquids may enter the folded core 502. In another example, the folded core 504 may be constructed of composite materials that are cured. The various materials in the composite structure may use resins or other liquids in the manufacturing or curing process. Unless the liquids are extracted during the curing phase, the liquid may remain in the folded core 502. Over a period of time, the moisture may degrade the materials in the folded core 502. For example, some adhesives may degrade over time when exposed to moisture. This degradation of the adhesive can reduce the strength of the bond between the folded core 502 and a face sheet, allowing the face sheet to delaminate and separate from the folded core 502. The depths of the valleys 506 may affect the geometry, and thus performance, of the airflow channel 510.

FIG. 6 is an illustration of a folded core 602 that may use features associated with a generally planar folded core peak along with features associated with an angular folded core peak. Shown in FIG. 6 are peaks 604 and valleys 606 that form the folded core 602. As discussed previously, a generally flat surface on a peak may provide certain benefits over a generally angular peak, with the same being true in the reverse.

For example, a generally planar peak surface may increase the amount of area available for adhesion while also distribution forces over a greater area, possibly making a folded core using the generally planar peak strong than comparable folded cores. But, the generally planar peak surface may use more material, thus possibly increasing the weight of the folded core. Similarly, a folded core using a generally angular peak surface may reduce the amount of material as well as may simplify construction, but may not have similar performance characteristics as generally planar peak surfaces with regard to bonding strength or force distribution.

The folded core 602 of FIG. 6 has a structure that provides some benefits of both types of peak surfaces. For example, peak 604A has an angular structure, which has a sharp bend at zenith 608, thus providing for at least a partial angular peak. Further, peak 604A has planar surfaces 610. The planar surfaces 610 can present a generally planar surface to which an adhesive may be applied, thus providing a stronger bond in some configurations. Therefore, in some configurations, the folded core 602 may provide some benefits relating to a generally planar peak surface as well as a generally angular peak surface.

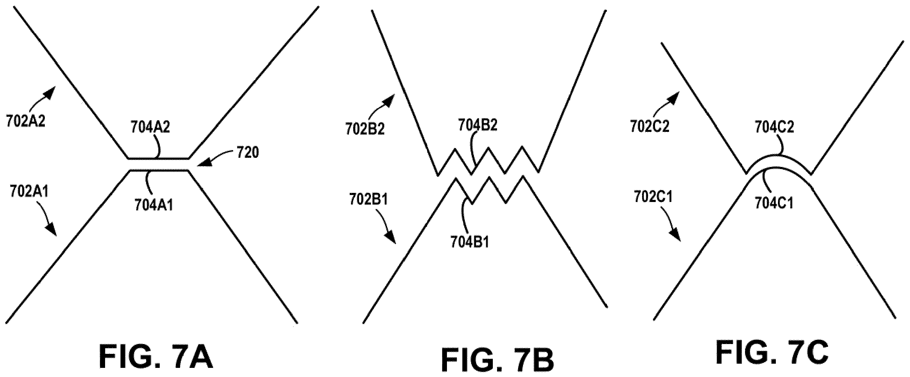

FIGS. 7A-7C are side, cross-sectional views illustrating surface profiles of peaks in a folded core panel configured to receive complementary peaks of another folded core panel in a stacked folded core design. In some implementations, a folded core panel may be bonded to another folded core panel instead of a face sheet. In some configurations, the peaks may have a shape configured to receive an opposing peak for bonding. In another configuration, the peaks of one folded core may have a shape configured to receive a valley from another folded core. Having peaks with various complementary shapes may provide certain benefits in some implementations. For example, the peaks provide a certain amount of surface area for bonding. In other implementations, the complementary peaks may have a shape that provides some degree of structural rigidity.

For example, FIG. 7A is a side, cross-sectional view illustrating one exemplary configuration of complementary peaks. Illustrated is a portion of cores 702A1 and 702A2. The cores 702A1 and 702A2 include peaks 704A1 and 704A2, respectively. The peaks 704A1 and 704A2 have a generally flat surface profile. In some configuration, the peaks 704A1 and 704A2 may provide various benefits. For example, the generally flat surface profile may be relatively easy to manufacture because of the absence of specialized or detailed features. Further, the generally flat surface profile of the peaks 704A1 and 704A2 may provide an increased amount of surface available for bonding when compared to peaks having a generally angular profile.

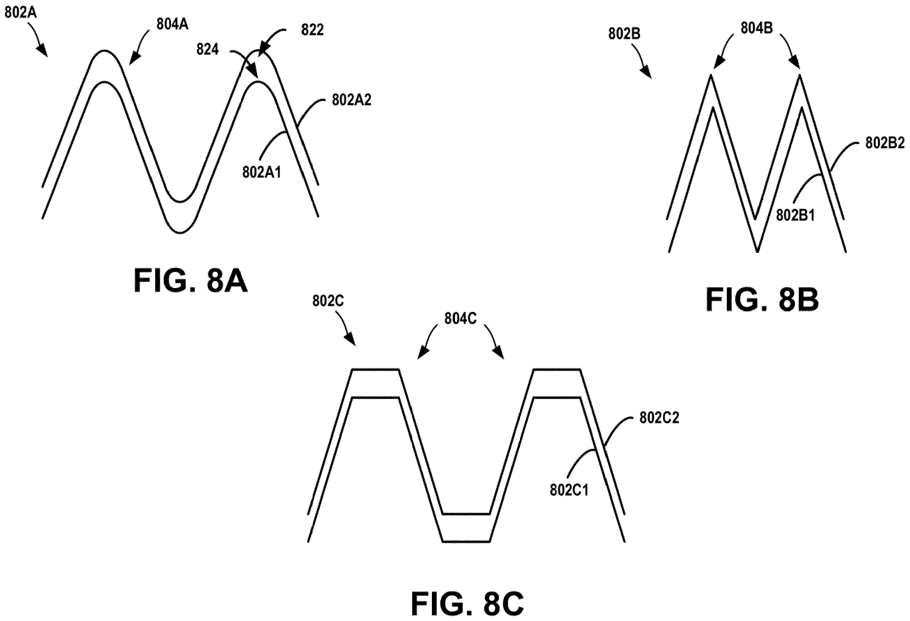

The configuration illustrated in FIG. 7A, as well as FIGS. 7B-7C described below, may be termed sparse stacking. The configuration may be termed sparse stacking because, when stacked, the folded cores do not abut against each other except for at interface location 720, which is the location at which the cores 702A1 and 702A2 are bonded to each other. The remaining portions of the cores 702A1 and 702A2 are not abutted against each other, providing for a relatively sparse amount of core per a given volume. FIGS. 8A-8C, below, provide exemplary configurations of dense stacking.

FIG. 7B is a side, cross-sectional view illustrating an alternate surface profile. Illustrated is a portion of cores 702B1 and 702B2. The cores 702B1 and 702B2 include peaks 704B1 and 704B2, respectively. The peaks 704B1 and 704B2 have a generally serrated surface profile. In some configuration, the peaks 704B1 and 704B2 may provide various benefits. For example, the generally serrated surface profile may provide an increased surface area for bonding over the generally flat surface profile of FIG. 7A. In further implementations, the generally serrated surface profile may provide a mechanical benefit whereby lateral movement of the peaks 704B1 and 704B2 with respect to each other may be reduced or impeded.

FIG. 7C is a side, cross-sectional view illustrating an alternate surface profile. Illustrated is a portion of core 702C1 and 702C2. The cores 702C1 and 702C2 include peaks 704C1 and 704C2, respectively. The peak 704C 1 has a generally convex surface profile and the peak 704C2 has a generally convex surface profile. In some configuration, the peaks 704C1 and 704C2 may provide various benefits. For example, the complementary convex/concave surface profile may provide an increased surface area for bonding over the surface profile illustrated in FIG. 7A. In some configurations, the complementary convex/concave surface profile may provide for alignment during construction of the cores 702C1 and 702C2.

FIGS. 8A-8C are side, cross-sectional views illustrating surface profiles of cores having complementary features that facilitate the stacking of folded cores on each other. In some implementations, if a particular thickness of a folded core is needed, it may be preferable to build the folded core using successive layers of folded cores placed on each other. The successive stacking of the folded cores may be required if the core's thickness makes manufacturing relatively difficult. When building a particularly thick core, the areas in the folds may be prone to defects that are undetectable if the folded core is a single, unitary piece. In a different manner, the same thickness may be achievable if several, thinner folded cores are stacked on each other, with the resulting thickness being the desired thickness.

The stacking of multiple folded cores to create a final folded core structure may have additional benefits. For example, it may be desirable for the final folded core structure to perform various functions at different levels. There may be several "strengthening" folded cores that are designed to provide a structural function. There may also be one or more cores that provide electrical functions, such as the conduction of electricity. In lieu of building a folded core from a single, unitary construction method, special-purposed folded core layers may be stacked on each other to provide the functionality desired. In some configurations, the folded cores in a folded core stack may use complementary features to provide both alignment capabilities as well as provide the structural benefits desired in a folded core.

FIG. 8A is a side, cross-sectional view illustrating one configuration for complementary features for a stacked, folded core. A stacked core 802A includes a core 802A1 and a core 802A2. The cores 802A1 and 802A2 may be folded cores constructed in accordance with various configurations described herein. Further, the cores 802A1 and 802A2 may be formed from different materials or may have other differences. For example, the core 802A1 may be a reinforcing core formed from relatively strong materials that are designed to provide structural support to the stacked core 802A. In another example, the core 802A2 may be an electrical core designed to conduct electricity, such as from lightning strikes. In a further example, the core 802A1 or the core 802A2 may be an environmental core designed to be resistance to various environmental conditions that may damage other cores in the stacked core 802A. As illustrated in FIG. 8A, the cores 802A1 and 802A2 have peaks 804A that are rounded to form a generally convex surface profile.

FIG. 8A, as well as FIGS. 8B-8C below, also illustrates a dense stacking configuration. In a manner different from the configurations illustrated in FIGS. 7A-7C, the folded cores forming the stacks illustrated in FIG. 8A, as well as FIGS. 8B-8C below, abut each other along a significant portion of their length. The abutting of the cores can provide for a structure that may reduce voids or air pockets formed from a stacking operation, which may occur in the sparse stacking illustrated in FIGS. 7A-7C. As illustrated, dense stacking may be provided by abutting an inner surface 822 of the core 802A2 with an outer surface 824 of the core 802A1. In various configurations, at least a portion of the peaks of one folded core may lie in at least a portion of the valleys of a complementary, abutting folded core. In some configurations, the abutment may include a bonding agent or adhesive between the core 802A1 and the core 802A2 to bond the core 802A1 to the core 802A2.

FIG. 8B is a side, cross-sectional view illustrating an alternate peak profile for a stacked core 802B. The stacked core 802B is formed from cores 802B1 and 802B2, which may be folded cores having various design configurations. The peaks 804B of the cores 802B1 and 802B2 are generally triangular in nature. In a similar manner, FIG. 8C is a side, cross-sectional view illustrating a further alternate peak profile for a stacked core 802C. The stacked core 802C is formed from cores 802C1 and 802C2, which may be folded cores having various design configurations. The peaks 804C of the cores 802C1 and 802C2 have a generally planar surface profile.

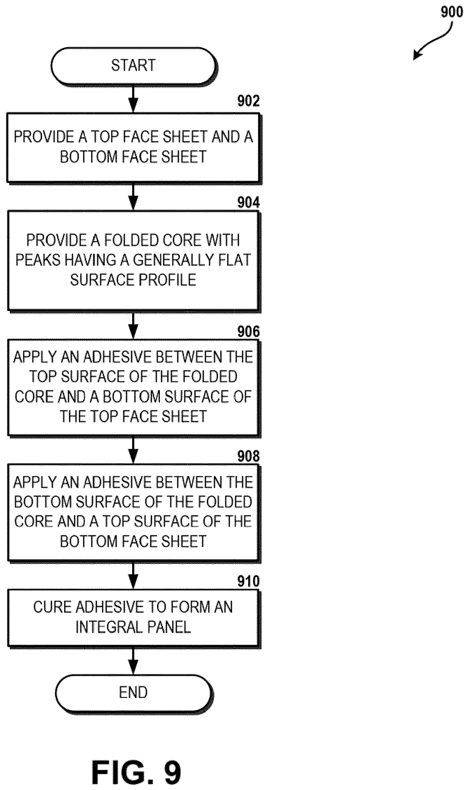

Turning now to FIG. 9, an illustrative routine 900 for making an aircraft panel is provided herein. Unless otherwise indicated, it should be appreciated that more or fewer operations may be performed than shown in the figures and described herein. Additionally, unless otherwise indicated, these operations may also be performed in a different order than those described herein.

The routine 900 starts at operation 902, where the top face sheet 104 and the bottom face sheet 106 are provided. The top face sheet 104 and the bottom face sheet 106 may be constructed from various materials, the present disclosure of which is not limited to any particular type.

The routine 900 proceeds to operation 904, where the folded core 202 with the peaks 204 is provided. The peaks 204 may have an angular, flat or rounded profile. The present disclosure, however, it not limited to any profile. The folded core 202 may also include the valleys 206. In some configurations, the folded core 202 is a single piece of material that is folded in a corrugated zigzag pattern. In some configurations, no cuts are made to the material forming the folded core 202 during the folding process of the folded core 202. In further configurations, the generally flat surface profile of the peaks 204 and the valleys 206 can provide an improved bond between the folded core 202 and the face sheets 104 and 106.

The routine 900 proceeds to operations 906 and 908, where an adhesive is applied between a top surface of the folded core 202 and a bottom surface of the top face sheet 104, and, an adhesive is applied between a bottom surface of the folded core 202 and a top surface of the bottom face sheet 106. The adhesive may be applied in various ways, of which the concepts described herein are not limited to any particular way. For example, the adhesive can be applied initially only to the surfaces of the folded core 202, the surfaces of the top sheet 104 and the bottom sheet 106, or both.

The routine 900 proceeds to operation 910, where the adhesive is cured to form an integral panel for use in an aircraft. As used herein, "integral" includes a single unit. It should be understood that the concepts and technologies described herein are not limited to any particular adhesive or curing method, as any appropriate adhesive and method may be used. Thereafter, the routine 900 ends.

Further, the disclosure comprises embodiments according to the following:
A panel for use in an aircraft, comprising:
a top face sheet;
a bottom face sheet; and
a folded core bonded to the top face sheet and the bottom face sheet, the folded core characterized by a corrugated zigzag pattern having a plurality of peaks, a plurality of valleys, and a plurality of non-vertical faces extending between the plurality of peaks and the plurality of valleys.

Optionally, wherein the plurality of peaks comprises a narrow peak angle.

Optionally, wherein the non-vertical faces comprise a plurality of face slopes.

Optionally, wherein a peak of the plurality of peaks comprises an angular surface profile.

Optionally, wherein a peak of the plurality of peaks comprises a round surface profile.

Optionally, the panel further comprising an airflow channel for removing moisture.

Optionally, wherein the airflow channel is formed by the plurality of valleys.

Optionally, wherein the folded core comprises a composite matrix.

A folded core for use in an aircraft, comprising:
a plurality of peaks comprising a plurality of ridges;
a plurality of valleys; and
a plurality of non-vertical faces extending between the plurality of peaks and the plurality of valleys,
wherein the plurality of peaks and the plurality of valleys are formed in a corrugated zigzag pattern.

Optionally, wherein a first ridge of the plurality of ridges comprise a narrow peak angle.

Optionally, wherein a second ridge of the plurality of ridges further comprise a wide peak angle.

Optionally, wherein a peak of the plurality of peaks comprises an angular surface profile or a round surface profile.

Optionally, the folded core further comprising a second folded core comprising a plurality of second peaks having shapes to receive at least a portion of the peaks.

Optionally, wherein the shapes comprise a flat surface profile, a serrated surface profile or a convex/concave surface profile.

Optionally, wherein the folded core is a single piece of material.

Optionally, wherein the folded core comprises a composite matrix.

A method of making an aircraft panel, comprising:
providing a top face sheet;
providing a bottom face sheet;
providing a folded core characterized by a corrugated zigzag pattern comprising;
   a plurality of peaks, and
   a plurality of valleys,
applying an adhesive to a top surface of the folded core;
applying the adhesive to a bottom surface of the folded core; and
curing the adhesive to form an integral panel.

Optionally, wherein the generally flat surface profile comprises a narrow peak angle and a wide peak angle.

Optionally, wherein a peak of the plurality of peaks comprises an angular surface profile, a round surface profile or a flat surface profile.

Optionally, the method further comprising an airflow channel formed by the plurality of valleys for removing moisture.

A stacked core, comprising:
a plurality of folded cores comprising:
a plurality of peaks comprising a plurality of ridges;
a plurality of valleys; and
a plurality of non-vertical faces extending between the plurality of peaks and the plurality of valleys,
wherein the plurality of peaks and the plurality of valleys are formed in a corrugated zigzag pattern,
wherein the plurality of folded cores comprise complementary features to allow a first folded core of the plurality of folded cores to be stacked on a second folded core of the plurality of folded cores.

Optionally, wherein the plurality of folded cores are sparse stacked.

Optionally, wherein a peak of the first folded core is shaped to be complementary to a peak of the second folded core.

Optionally, wherein the peak of the first folded core and the peak of the second folded core comprise a flat surface profile, a serrated surface profile, or a convex/concave surface profile.

Optionally, wherein the plurality of folded cores are dense stacked.

Optionally, wherein an inner surface of the first core abuts to an outer surface of the second core.

Optionally, the stacked core further comprising a bonding agent to bond the first core to the second core.

Optionally, wherein the first folded core provides a different function than the second folded core.

Optionally, wherein the first folded core provides structural support to the stacked core, conducts electricity, or resists environmental conditions.

## Claims

1. A panel for use in an aircraft, comprising:
a top face sheet (104);
a bottom face sheet (106); and
a first folded core (202) bonded to the top face sheet and the bottom face sheet, the first folded core **characterized by** a corrugated zigzag pattern of a plurality of ridges (208) having a plurality of first peaks (204), a plurality of valleys (206), and a plurality of non-vertical faces (205) extending between the plurality of first peaks and the plurality of valleys;
wherein the plurality of first peaks of each ridge (208) comprises a generally planar peak (610) having a sharp bend at a zenith (608), thus providing a partial angular peak; wherein each of the plurality of ridges (208) comprises a generally flat surface profile having a plurality of first peaks (204) including a peak with a narrow peak angle and a peak with a wide peak angle, and wherein a narrow peak angle is less than or equal to 90 degrees and a wide peak angle is greater than 90 degrees.

2. The panel of claim 1, wherein the non-vertical faces (205) comprise a plurality of face slopes.

3. The panel of any preceding claim, further comprising an airflow channel (510) for removing moisture.

4. The panel of claim 3, wherein the airflow channel (510) is formed by the plurality of valleys (206).

5. The panel of any preceding claim, wherein the first folded core (202) comprises a composite matrix.

6. The panel of any preceding claim , further comprising a second folded core (202) comprising a plurality of second peaks (204), wherein a peak of the first folded core (202) is shaped to be complementary to a peak of the second folded core (202) to allow the first folded core to be stacked on the second folded core.

7. The panel of claim 6, wherein the peak of the first folded core (202) and the peak of the second folded core (202) comprise a flat surface profile, a serrated surface profile or a convex/concave surface profile.

8. The panel of any of claims 1 to 5, further comprising a second folded core (202) comprising a plurality of second peaks (204), wherein an inner surface of the first folded core (202) abuts an outer surface of the second folded core.

9. The panel of claim 8, wherein the abutment may include a bonding agent or adhesive between the first folded core (202) and the second folded core (202) to bond the first folded core to the second folded core.

10. The panel of claim 8 or 9, wherein the first folded core (202) and the second folded core (202) each provide one of a structural and an electrical function.

11. The panel of any of claims 6 to 10, wherein the first folded core (202) is a single piece of material and the second folded core (202) is a single piece of material.

12. A method of making an aircraft panel, comprising:
providing a top face sheet (104);
providing a bottom face sheet (106);
providing a folded core (202) **characterized by** a corrugated zigzag pattern of a plurality of ridges (208A) comprising;
a plurality of first peaks (204), and
a plurality of valleys (206),
wherein the plurality of first peaks of each ridge (208A) comprises a generally planar peak (610) having a sharp bend at a zenith (608), thus providing a partial angular peak;
applying an adhesive to a top surface of the folded core;
applying the adhesive to a bottom surface of the folded core; and
curing the adhesive to form an integral panel, wherein each of the plurality of ridges (208A) comprises a generally flat surface profile having a plurality of first peaks (204) including a peak with a narrow peak angle and a peak with a wide peak angle,
wherein a narrow peak angle is less than or equal to 90 degrees and a wide peak angle is greater than 90 degrees.

13. The method of claim 12, further comprising an airflow channel (510) formed by the plurality of valleys (206) for removing moisture.

## Patentansprüche

1. Platte zur Verwendung in einem Luftfahrzeug, umfassend:
ein oberseitiges Blech (104);
ein unterseitiges Blech (106); und
einen ersten gefalteten Kern (202), der an das oberseitige Blech und das unterseitige Blech gebunden ist, wobei der erste gefaltete Kern durch ein wellenförmiges Zickzackmuster einer Mehrzahl von Erhöhungen (208) mit einer Mehrzahl von ersten Spitzen (204), einer Mehrzahl von Vertiefungen (206) und einer Mehrzahl von nicht vertikalen Flächen (205), die sich zwischen der Mehrzahl von ersten Spitzen und der Mehrzahl von Vertiefungen erstrecken, gekennzeichnet ist;
wobei die Mehrzahl von ersten Spitzen jeder Erhöhung (208) eine im Allgemeinen planare Spitze (610) mit einer scharfen Biegung an einem Scheitelpunkt (608) umfasst, wodurch eine teilweise abgewinkelte Spitze bereitgestellt ist; wobei jede der Mehrzahl von Erhöhungen (208) ein im Allgemeinen flaches Oberflächenprofil mit einer Mehrzahl von ersten Spitzen (204), einschließlich einer Spitze mit einem schmalen Spitzenwinkel und einer Spitze mit einem breiten Spitzenwinkel, umfasst, und wobei ein schmaler Spitzenwinkel kleiner als oder gleich 90 Grad ist und ein breiter Spitzenwinkel größer als 90 Grad ist.

2. Platte nach Anspruch 1, wobei die nicht vertikalen Flächen (205) eine Mehrzahl von Flächenneigungen umfassen.

3. Platte nach einem der vorhergehenden Ansprüche, ferner umfassend einen Luftströmungskanal (510) zum Abführen von Feuchtigkeit.

4. Platte nach Anspruch 3, wobei der Luftströmungskanal (510) von der Mehrzahl von Vertiefungen (206) gebildet ist.

5. Platte nach einem der vorhergehenden Ansprüche, wobei der erste gefaltete Kern (202) eine Verbundmatrix umfasst.

6. Platte nach einem der vorhergehenden Ansprüche, ferner umfassend einen zweiten gefalteten Kern (202), der eine Mehrzahl von zweiten Spitzen (204) umfasst, wobei eine Spitze des ersten gefalteten Kerns (202) so geformt ist, dass sie komplementär zu einer Spitze des zweiten gefalteten Kerns (202) ist, um zu ermöglichen, dass der erste gefaltete Kern auf den zweiten gefalteten Kern gestapelt wird.

7. Platte nach Anspruch 6, wobei die Spitze des ersten gefalteten Kerns (202) und die Spitze des zweiten gefalteten Kerns (202) ein flaches Oberflächenprofil, ein gezacktes Oberflächenprofil oder ein konvexes/konkaves Oberflächenprofil umfassen.

8. Platte nach einem der Ansprüche 1 bis 5, ferner umfassend einen zweiten gefalteten Kern (202), der eine Mehrzahl von zweiten Spitzen (204) umfasst, wobei eine Innenfläche des ersten gefalteten Kerns (202) auf einer Außenfläche des zweiten gefalteten Kerns aufliegt.

9. Platte nach Anspruch 8, wobei das Auflager ein Bindemittel oder einen Klebstoff zwischen dem ersten gefalteten Kern (202) und dem zweiten gefalteten Kern (202) zum Binden des ersten gefalteten Kerns an den zweiten gefalteten Kern umfassen kann.

10. Platte nach Anspruch 8 oder 9, wobei der erste gefaltete Kern (202) und der zweite gefaltete Kern (202) jeweils eines einer strukturellen und einer elektrischen Funktion bereitstellen.

11. Platte nach einem der Ansprüche 6 bis 10, wobei der erste gefaltete Kern (202) ein einzelnes Materialstück ist und der zweite gefaltete Kern (202) ein einzelnes Materialstück ist.

12. Verfahren zum Herstellen einer Luftfahrzeugplatte, umfassend:
Bereitstellen eines oberseitigen Blechs (104);
Bereitstellen eines unterseitigen Blechs (106);
Bereitstellen eines gefalteten Kerns (202), der durch ein wellenförmiges Zickzackmuster einer Mehrzahl von Erhöhungen (208A) gekennzeichnet ist, umfassend;
eine Mehrzahl von ersten Spitzen (204), und
eine Mehrzahl von Vertiefungen (206),
wobei die Mehrzahl von ersten Spitzen jeder Erhöhung (208A) eine im Allgemeinen planare Spitze (610) mit einer scharfen Biegung an einem Scheitelpunkt (608) umfasst,
wodurch eine teilweise abgewinkelte Spitze bereitgestellt wird;
Auftragen eines Klebstoffs auf eine obere Fläche des gefalteten Kerns;
Auftragen des Klebstoffs auf eine untere Fläche des gefalteten Kerns; und
Aushärten des Klebstoffs, um eine integrale Platte zu bilden, wobei jede der Mehrzahl von Erhöhungen (208A) ein im Allgemeinen flaches Oberflächenprofil mit einer Mehrzahl von ersten Spitzen (204), einschließlich einer Spitze mit einem schmalen Spitzenwinkel und einer Spitze mit einem breiten Spitzenwinkel, umfasst,
wobei ein schmaler Spitzenwinkel kleiner als oder gleich 90 Grad ist und ein breiter Spitzenwinkel größer als 90 Grad ist.

13. Verfahren nach Anspruch 12, ferner umfassend einen Luftströmungskanal (510), der von der Mehrzahl von Vertiefungen (206) zum Abführen von Feuchtigkeit gebildet wird.

## Revendications

1. Panneau destiné à être utilisé dans un aéronef, comprenant :
une peau supérieure (104) ;
une peau inférieure (106) ; et
une première âme plissée (202) liée à la peau supérieure et à la peau inférieure, la première âme plissée étant **caractérisée par** un motif ondulé en zigzag d'une pluralité de rides (208) présentant une pluralité de premières crêtes (204), une pluralité de creux (206), et une pluralité de faces non verticales (205) s'étendant entre la pluralité de premières crêtes et la pluralité de creux ;
la pluralité de premières crêtes de chaque ride (208) comprenant une crête généralement plane (610) présentant un coude brusque à un zénith (608), ménageant ainsi une crête angulaire partielle ; chacune de la pluralité de rides (208) comprenant un profil de surface généralement plat présentant une pluralité de premières crêtes (204) comportant une crête pourvue d'un petit angle de crête et une crête pourvue d'un grand angle de crête, et un petit angle de crête étant inférieur ou égal à 90 degrés et un grand angle de crête étant supérieur à 90 degrés.

2. Panneau selon la revendication 1, les faces non verticales (205) comprenant une pluralité de pentes de face.

3. Panneau selon l'une quelconque des revendications précédentes, comprenant en outre un canal d'écoulement d'air (510) pour l'élimination de l'humidité.

4. Panneau selon la revendication 3, le canal d'écoulement d'air (510) étant formé par la pluralité de creux (206).

5. Panneau selon l'une quelconque des revendications précédentes, la première âme plissée (202) comprenant une matrice composite.

6. Panneau selon l'une quelconque des revendications précédentes, comprenant en outre une deuxième âme plissée (202) comprenant une pluralité de deuxièmes crêtes (204), une crête de la première âme plissée (202) étant conformée de manière à être complémentaire d'une crête de la deuxième âme plissée (202) pour permettre l'empilement de la première âme plissée sur la deuxième âme plissée.

7. Panneau selon la revendication 6, la crête de la première âme plissée (202) et la crête de la deuxième âme plissée (202) comprenant un profil de surface plat, un profil de surface dentelé ou un profil de surface convexe/concave.

8. Panneau selon l'une quelconque des revendications 1 à 5, comprenant en outre une deuxième âme plissée (202) comprenant une pluralité de deuxièmes crêtes (204), une surface intérieure de la première âme plissée (202) venant en butée contre une surface extérieure de la deuxième âme plissée.

9. Panneau selon la revendication 8, la butée pouvant comporter un agent de liaison ou un adhésif entre la première âme plissée (202) et la deuxième âme plissée (202) pour lier la première âme plissée à la deuxième âme plissée.

10. Panneau selon la revendication 8 ou 9, la première âme plissée (202) et la deuxième âme plissée (202) assurant chacune une fonction soit structurale soit électrique.

11. Panneau selon l'une quelconque des revendications 6 à 10, la première âme plissée (202) formant une seule pièce de matériau et la deuxième âme plissée (202) formant une seule pièce de matériau.

12. Procédé de fabrication d'un panneau d'aéronef, comprenant :
la fourniture d'une peau supérieure (104) ;
la fourniture d'une peau inférieure (106) ;
la fourniture d'une âme plissée (202) **caractérisée par** un motif ondulé en zigzag d'une pluralité de rides (208A) comprenant :
une pluralité de premières crêtes (204), et
une pluralité de creux (206),
la pluralité de premières crêtes de chaque ride (208A) comprenant une crête généralement plane (610) présentant un coude brusque à un zénith (608), ménageant ainsi une crête angulaire partielle ;
l'application d'un adhésif sur une surface supérieure de l'âme plissée ;
l'application de l'adhésif sur une surface inférieure de l'âme plissée ; et
le durcissement de l'adhésif afin de former un panneau intégral, chacune de la pluralité de rides (208A) comprenant un profil de surface généralement plat présentant une pluralité de premières crêtes (204) comportant une crête pourvue d'un petit angle de crête et une crête pourvue d'un grand angle de crête,
un petit angle de crête étant inférieur ou égal à 90 degrés et un grand angle de crête étant supérieur à 90 degrés.

13. Procédé selon la revendication 12, comprenant en outre un canal d'écoulement d'air (510) formé par la pluralité de creux (206) pour l'élimination de l'humidité.
